Europäisches Patentamt

European Patent Office    (11) Numéro de publication: **0 198 763**

Office européen des brevets    **B1**

(12)    # FASCICULE DE BREVET EUROPÉEN

(45) Date de publication du fascicule du brevet:
**10.08.88**

(21) Numéro de dépôt: **86400710.9**

(22) Date de dépôt: **02.04.86**

(51) Int. Cl.⁴: **B 60 T 13/24**, B 60 Q 1/44

(54) Servomoteur d'assistance au freinage comportant un contacteur de stop.

(30) Priorité: **17.04.85 FR 8505811**

(43) Date de publication de la demande:
**22.10.86 Bulletin 86/43**

(45) Mention de la délivrance du brevet:
**10.08.88 Bulletin 88/32**

(84) Etats contractants désignés:
**DE GB IT**

(56) Documents cité:
**EP-A-0 158 552**
**EP-A-0 160 586**
**DE-C-3 226 579**
**FR-A-2 476 577**
**US-A-3 293 849**
**US-A-4 227 371**

(73) Titulaire: **BENDIX France, 126, rue de Stalingrad,
F-93700 Drancy (FR)**

(72) Inventeur: **Gautier, Jean-Pierre, 46 ter Av. Louis
Blanc, F-93600 Aulnay Sous Bois (FR)**
Inventeur: **Penigault, Jean-Louis, 100 Av. Kléber,
F-75016 Paris (FR)**

(74) Mandataire: **Timoney, Ian Charles Craig, Division
Technique Service Brevets Bendix Europe 126,
rue de Stalingrad, F-93700 Drancy (FR)**

LIBER, STOCKHOLM 1988

## Description

La présente invention concerne les servomoteurs d'assistance au freinage du type comprenant, dans un boîtier, une structure de piston renfermant un moyen de valve actionné par une tige d'entrée supportant un organe de butée coopérant en appui, dans la position de repos du servomoteur, avec une structure d'arrêt solidaire du boîtier, et déplaçable avec la tige d'entrée lors de l'actionnement du servomoteur.

Un servomoteur de ce type est décrit dans le document US-A-4 227 371, ainsi que dans la demande de brevet européen EP-A-0 158 552 au nom de la demanderesse. Dans les servomoteurs d'assistance classiques, du type dans lequel la structure de piston vient directement en appui, dans la position de repos du servomoteur, avec la coquille arrière du boîtier, on peut aménager, dans cette coquille arrière de boîtier, un contacteur de stop actionné directement par la structure de piston, comme décrit dans le document FR-A-2 476 577. Outre que cet aménagement de contacteur de stop pose des problèmes d'étanchéité et peut induire des problèmes d'usure au niveau de la membrane de la structure de piston, dans les servomoteurs du type défini plus haut, à course morte d'actionnement réduite, la position de repos du servomoteur est définie par la venue en butée de l'organe de butée sur la tige d'entrée avec la structure d'arrêt solidaire du botîer. Dans ces conditions, la position de repos de la structure de piston n'est plus définie avec précision par rapport au boîtier et l'aménagement connu d'un contacteur de stop dans la coquille arrière du boitîer pour coopérer avec la structure de piston ne convient plus, en raison des surcourses qui doivent alors être prévues pour le contacteur de stop.

La présente invention a pour objet de proposer un aménagement de contacteur de stop pour servomoteur du type défini ci-dessus dans un agencement simple, robuste, de faibles coûts de fabrication et au fonctionnement précis et fiable.

Pour ce faire, selon une caractéristique de l'invention, le servomoteur comporte un moyen de contact électrique monté sur la structure d'arrêt et actionnable par l'organe de butée porté par la tige d'entrée.

Selon une caractéristique particulière de l'invention, le moyen de contact électrique porte un organe de contact électrique mobile par rapport à la structure d'arrêt et coopérant en engagement, typiquement en appui, avec l'organe de butée supporté par la tige d'entrée.

Avec un tel agencement, le contacteur de stop répond directement au déplacement de la tige d'entrée à partir de sa position de repos quel que soit le processus adopté pour déterminer, in situ, cette position de repos.

D'autres caractéristiques et avantages de la présente invention ressortiront de la description suivante d'un mode de réalisation, donné à titre illustratif mais nullement limitatif, faite en référence avec les dessins annexés, sur lesquels:

- la Figure 1 est une vue schématique en coupe longitudinale de la partie centrale arrière d'un servomoteur pneumatique d'assistance selon l'invention ; et

- la Figure 2 est une vue schématique, en coupe longitudinale partielle, à plus grande échelle, de l'agencement de contacteur de stop du servomoteur de la Figure 1.

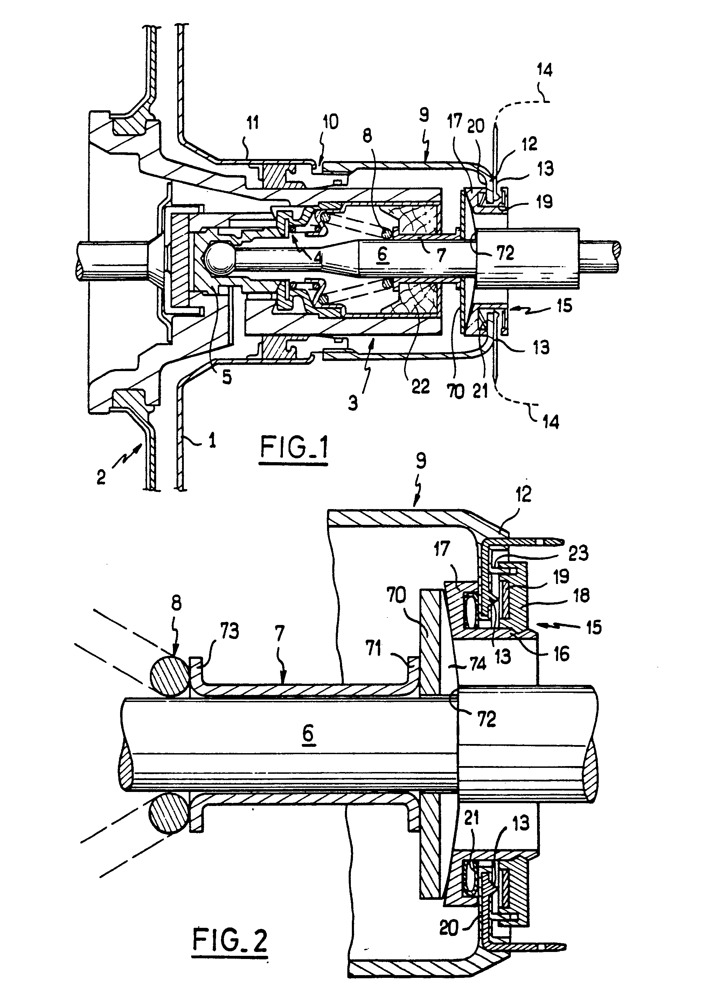

On reconnaît, sur la Figure 1, une portion de la coquille arrière 1 d'un boîtier de servomoteur d'assistance au freinage du type à dépression, le boîtier renfermant une structure de piston, désignée généralement par la référence 2, comprenant une partie de moyeu arrière de diamètre réduit 3 renfermant un moyen de valve de distribution 4 actionné, via un plongeur de valve 5, par une tige d'entrée 6 dont l'extrémité extérieure est reliée typiquement à une pédale de frein (non représentée) d'un véhicule. Le servomoteur représenté sur la Figure 1 est du type décrit dans la demande européenne N.85 400 483 sus-mentionnée et comporte, montée coulissant sur la tige d'entrée 6, une douille 7 sollicitée élastiquement, dans la direction opposée au plongeur 5, par un ressort de rappel 8 prenant appui sur l'armature du support du moyen de valve 4 et destinée à coopérer en appui avec une structure d'arrêt, désignée généralement par la référence 9, solidaire de la coquille de boîtier 1 et constituée typiquement sous la forme d'un manchon tubulaire ou capuchon rigide rapporté sur un ensemble annulaire 10 de guidage et d'étanchéité du moyeu 3 monté dans un prolongement arrière tubulai re ou cheminée 11 de la coquille arrière 1.

Comme on le voit mieux sur la Figure 2, le manchon 9 comporte, à l'opposé de l'ensemble annulaire 10, une partie de collerette annulaire d'extrémité 12 s'étendant radialement vers l'intérieur au travers de laquelle passe la tige d'entrée 6. Dans la partie de collerette d'extrémité 12 sont ménagés, par exemple diamétralement opposés, deux contacts métalliques électriques fixes 13 faisant partiellement saillie vers l'arrière de la partie de la collerette 12 et destinés à être interposés dans une ligne électrique de feux de stop 14. Dans le mode de réalisation représenté, dans la partie de collerette d'extrémité 12 est monté à coulissement un ensemble tubulaire de contact électrique mobile désigné généralement par la référence 15 et comportant une partie de manchon intérieure 16 s'étendant autour de la tige d'entrée 6, une partie d'actionnement 17, disposée, dans le mode de réalisation représenté, à l'intérieur du manchon 9, et une partie support de contact extérieur 18 dans laquelle est montée une rondelle métallique annulaire 19 susceptible de venir porter en appui contre les contacts électriques fixes 13 pour fermer la ligne électrique 14.

Dans le mode de réalisation représenté, à la douille 7 est associé un disque 70 monté également à coulissement libre sur la tige d'entrée 6 et interposé entre une collerette d'extrémité 71 de la douille 7 et un épaulement 72 formé par une partie en surépaisseur de la tige d'entrée 6. La douille 7 comporte à son extrémité opposée au disque 70, une autre collerette d'extrémité 73 sur laquelle prend appui le ressort 8, lequel sollicite ainsi l'ensemble de la douille 7 et du disque 70 dans la direction vers l'épaulement 72. Comme on le voit bien sur la Figure 2, la partie d'actionnement 17 de l'ensemble 16 est agencée de façon à être interposée entre la face arrière du disque 70 et la face d'appui intérieure 20 formée par la partie de collerette d'extrémité 12 du manchon 9. Un ressort écarteur 21 est disposé dans la partie d'actionnement 17 de façon à prendre appui sur la face d'appui 20 pour solliciter l'ensemble tubulaire 16 dans la direction vers le plongeur de valve 5, c'est-à-di-re dans la direction tendant à amener la rondelle métallique 19 en contact avec les contacts électriques fixes 13.

Dans la position de repos du servomoteur représentée sur les Figures 1 et 2, le plongeur de valve 5 est dans une position vis à vis du moyeu 3 telle que le moyen de valve 4 est en contact sur ses deux sièges, l'organe de butée 7, 70, sollicité par le ressort 8, étant en appui contre la face d'appui 20 via la partie d'actionnement 17, c-est-à-dire dans une configuration où, le ressort 21 étant plus faible que le ressort 8, la ligne électrique 14 est ouverte. Lorsque la tige d'entrée 6 est enfoncée pour actionner le servomoteur, le disque 70 est placé en appui contre l'épaulement 72 de la tige d'entrée 6 et tout déplacement ultérieur de cette dernière provoquera donc un déplacement du disque 70 à l'écart de la face d'appui 20, autorisant ainsi l'ensemble 16 à se déplacer vers la gauche, sur les dessins, pour amener très rapidement la rondelle annulaire 19 à fermer la ligne 14. Lorsque le servomoteur cesse d'être actionné, l'équipage mobile recouvre la position représentée sur les Figurer 1 et 2, c-est-à-dire avec le disque 70 repoussant la partie d'actionnement 17 de l'ensemble 16 contre la face d'appui 20 à l'encontre du ressort écarteur 21, en ouvrant ainsi la ligne 14.

Dans le mode de réalisation représenté, le disque 70 présente pour tenir compte d'éventuels légers désalignements entre la tige d'entrée 6 et le manchon 9 une face arrière convexe formant une première surface d'appui extérieure coopérant avec la partie d'actionnement 17 et une seconde surface d'appui centrale coopérant avec l'épaulement 72 , cette face arrière convexe comportant des nervures radiales 74 pour permettre un libre accès de l'air atmosphérique jusqu'au moyen de valve 4 via le filtre à air 22 disposé dans le moyeu 3 autour de la douille 7. Pour faciliter le coulissement centré de l'ensemble tubulaire 16 vis à vis de la partie de collerette d'extrémité 12, on peut prévoir, sur cette dernière, une projection annulaire de guidage 23 coopérant avec un logement correspondant de la partie de support de contact arrière 18. Cette projection annulaire 23 assure également la protection des contacts électriques contre l'intrusion d'agents contaminants.

Quoique la présente invention ait été décrite en relation avec un mode de réalisation particulier, elle ne s'en trouve pas limitée, mais est au contraire susceptible de modifications et de variantes qui apparaîtront à l'homme de l'art. En particulier, au lieu de prévoir des contacts électriques normalement ouverts au repos, on peut prévoir, sur la partie de collerette d'extrémité 12 et dans l'ensemble tubulaire 16, des contacts électriques inversés, normalement fermés au repos, s'ouvrant lorsque l'ensemble 16 se déplace pour suivre le mouvement du disque 70. Dans ce dernier cas, on peut utiliser directement le disque 70 comme contact électrique mobile. En variante, on peut prévoir dans la partie de collerette d'extrémité 12 un contacteur sous vide du type "reed" coopérant avec un aimant permanent porté par le disque 70 ou déplacé par ce dernier.

**Revendications**

1. Servomoteur d'assistance au freinage comprenant, dans un boîtier (1), une structure de piston (2, 3) renfermant un moyen de valve (4) actionné par une tige d'entrée (6) supportant un organe de butée (7, 70) coopérant en appui, dans la position de repos du servomoteur, avec une structure d'arrêt (9, 12) solidaire du boîtier (1) et déplaçable avec la tige d'entrée lors de l'actionnement du servomoteur, caractérisé en ce qu'il comporte un moyen de contact électrique (13, 15) monté sur la structure d'arrêt (9, 12) et actionnable par l'organe de butée (7, 70).

2. Servomoteur selon la revendication 1, caractérisé en ce que le moyen de contact électrique comporte un organe de contact électrique (15) mobile par rapport à la structure d'arrêt (9, 12) et coopérant en engagement avec l'organe de butée (7, 70).

3. Servomoteur selon la revendication 2, caractérisé en ce qu'il comprend un ressort (21) disposé entre la structure d'arrêt (9, 12) et l'organe de contact électrique mobile (15) et sollicitant ce dernier dans la direction vers l'organe de butée (7, 70).

4. Servomoteur selon la revendication 3, caractérisé en ce que l'organe de contact électrique mobile (15) comprend une partie d'actionnement (17) interposée entre l'organe de butée (7, 70) et une face d'appui intérieure (20) de la structure d'arrêt (9, 12).

5. Servomoteur selon la revendication 4, caractérisé en ce que la structure d'arrêt comporte une partie de collerette (12) d'un manchon tubulaire (9) rapporté sur le boîtier (1), la partie de collerette (12) formant ladite surface d'appui (20) et supportant deux organes de contact électrique fixes (13).

6. Servomoteur selon la revendication 5, caractérisé en ce que l'organe de contact électrique mobile (15) est monté à coulissement par rapport à la partie de collerette (12) et comporte une pièce de contact métallique (19) agencée pour venir porter en appui contre les organes de contact électrique fixes (13).

7. Servomoteur selon la revendication 6, caractérisé en ce que le ressort (21) est logé dans la partie d'actionnement (17), les organes de contact électrique fixes (13) faisant saillie dans la direction axiale opposée à la surface d'appui intérieure (20).

8. Servomoteur selon l'une des revendications 4 à 6, caractérisé en ce que l'organe de butée (7, 70) est monté coulissant sur la tige (6) et comporte une première surface d'appui coopérant avec la partie d'actionnement (17) et une seconde surface d'appui coopérant avec un épaulement (72) de la tige d'entrée (6).

9. Servomoteur selon la revendication 8, caractérisé en ce que l'organe de butée comporte une partie de douille cylindrique (7) et une partie de collerette distincte (70) formant lesdites première et seconde surfaces d'appui.

10. Servomoteur selon la revendication 9, caractérisé en ce que la partie de collerette (70) comporte une face nervurée à profil extérieur bombé (74) constituant les première et seconde surfaces d'appui.

**Patentansprüche**

1. Bremskraftverstärker mit einer in einem Gehäuse (1) untergebrachten Kolbenanordnung (2, 3), die ein Ventil (4) enthält, welches von einer Eingangsstange (6) betätigt wird, die ein Anlegteil (7, 70) trägt, wobei das Anlegteil in der Ruhestellung des Verstärkers mit einer einen Teil des Gehäuses (1) bildenden Anschlagvorrichtung (9, 12) anlagemäßig zusammenwirkt und bei einer Betätigung des Verstärkers mit der Eingangsstange verschiebbar ist, dadurch gekennzeichnet, daß er ein elektrisches Kontaktmittel (13, 15) aufweist, das an der Anschlagvorrichtung (9, 12) angebracht ist und durch das Anlegteil (7, 70) betätigbar ist.

2. Bremskraftverstärker nach Anspruch 1, dadurch gekennzeichnet, daß das elektrische Kontaktmittel aus einem elektrischen Kontakt (15) besteht, der bezüglich der Anschlagvorrichtung (9, 12) beweglich ist und mit dem Anlegteil (7, 70) anlagemäßig zusammenwirkt.

3. Bremskraftverstärker nach Anspruch 2, dadurch gekennzeichnet, daß er eine Feder (21) aufweist, die zwischen der Anschlagvorrichtung (9, 12) und dem beweglichen elektrischen Kontakt (15) angeordnet ist und das letztere in Richtung auf das Anlegteil (7, 70) vorspannt.

4. Bremskraftverstärker nach Anspruch 3, dadurch gekennzeichnet, daß der bewegliche elektrische Kontakt (15) einen Betätigungsabschnitt (17) aufweist, der zwischen dem Anlegteil (7, 70) und einer inneren Anschlagfläche (20) der Anschlagvorrichtung (9, 12) angeordnet ist.

5. Bremskraftverstärker nach Anspruch 4, dadurch gekennzeichnet, daß die Anschlagvorrichtung einen Ringabschnitt (12) eines rohrförmigen Mantels (9) umfaßt, der am Gehäuse (1) angesetzt ist, wobei der Ringabschnitt (12) die besagte Anschlagfläche (20) bildet und zwei ortsfeste elektrische Kontakte (13) trägt.

6. Bremskraftverstärker nach Anspruch 5, dadurch gekennzeichnet, daß der bewegliche elektrische Kontakt (15) bezüglich des Ringabschnitts (12) gleitend gelagert ist und ein metallisches Kontaktstück (19) umfaßt, das mit den ortsfesten elektrischen Kontakten (13) in Anlage bringbar ist.

7. Bremskraftverstärker nach Anspruch 6, dadurch gekennzeichnet, daß die Feder (21) in dem Betätigungsabschnitt (17) untergebracht ist, wobei die ortsfesten elektrischen Kontakte (13) in der axialen Richtung vorstehen, die der inneren Anschlagfläche (20) entgegengerichtet ist.

8. Bremskraftverstärker nach einem der Ansprüche 4 - 6, dadurch gekennzeichnet, daß das Anlegteil (7, 70) auf der Stange (6) gleitend gelagert ist und eine mit dem Betätigungsabschnitt (17) zusammenwirkende erste Anlagefläche und eine mit einer Schulter (72) der Eingangsstange (6) zusammenwirkende zweite Anlagefläche aufweist.

9. Bremskraftverstärker nach Anspruch 8, dadurch gekennzeichnet, daß das Anlegteil einen zylindrischen Hülsenabschnitt (7) und einen getrennten Ringabschnitt (70) aufweist, welche die besagte erste und zweite Anlagefläche bilden.

10. Bremskraftverstärker nach Anspruch 9, dadurch gekennzeichnet, daß der Ringabschnitt (70) eine gerippte Stirnfläche (74) mit einem nach außen gewölbten Profil aufweist, welche die erste und zweite Anlagefläche bildet.

**Claims**

1. Servomotor for assisting with braking comprising, in a casing (1), a piston structure (2, 3) enclosing a valve means (4) which is actuated by an input rod (6) supporting an abutment component (7, 70) which cooperates in bearing, in the rest position of the servomotor, with a stop structure (9, 12) which is firmly fixed to the casing (1) and is able to move with the input rod during operation of the servomotor, characterized in that it incorporates an electrical contact means (13, 15) which is mounted on the stop structure (9, 12) and is capable of being actuated by the abutment component (7, 70).

2. Servomotor according to Claim 1, characterized in that the electrical contact means incorporates an electrical contact component (15) which is movable relative to the stop structure (9, 12) and which cooperates in engagement with the abutment component (7, 70).

3. Servomotor according to Claim 2, characterized in that it comprises a spring (21) which is situated between the stop structure (9, 12) and the movable electrical contact component (15) and which pushes the latter in the direction towards the abutment component (7, 70)

4. Servomotor according to Claim 3, characterized in that the movable electrical contact component (15) comprises an actuating portion (17) which is interposed between the abutment component (7, 70) and an internal bearing surface (20) of the stop structure (9, 12).

5. Servomotor according to Claim 4, characterized in that the stop structure incorporates a collar portion (12) of a tubular sleeve (9) attached to the casing (1), the collar portion (12) forming the said bearing surface (20) and supporting two stationary electrical contact components (13).

6. Servomotor according to Claim 5, characterized in that the flowable electrical contact component (15) is mounted slideably relative to the collar portion (12) and incorporates a metal contact component (19) which is arranged to come to bear against the stationary electrical contact components (13).

7. Servomotor according to Claim 6, characterized in that the spring (21) is held in the actuating portion (17), the stationary electrical contact components (13) projecting in the opposite axial direction from the inner bearing surface (20).

8. Servomotor according to one of claims 4 to 6, characterized in that the abutment component (7, 70) is slideably mounted on the rod (6) and incorporates a first bearing surface which cooperates with the actuating portion (17) and a second bearing surface which cooperates with a shoulder (72) of the input rod (6).

9. Servomotor according to Claim 8, characterized in that the abutment component incorporates a cylindrical sleeve portion (7) and a separate collar portion (70) forming the said first and second bearing surfaces.

10. Servomotor according to Claim 9, characterized in that the collar portion (70) incorporates a ribbed surface with a convex external profile (74) forming the first and second bearing surfaces.

FIG. 1

FIG. 2